# EUROPEAN PATENT SPECIFICATION

(11) **EP 4 172 530 B1**
(45) Date of publication and mention of the grant of the patent: **29.07.2026**
(21) Application number: 21833544.6
(22) Date of filing: 17.06.2021
(51) Int. Cl.: F16L 55/00, G08C 17/02, H04Q 9/00, F16L 101/30

(54) **AN INSPECTION SYSTEM, A CLAMPING STRUCTURE AND AN INSPECTION METHOD IN ASSOCIATION WITH THE INSPECTION SYSTEM**
INSPEKTIONSSYSTEM, KLEMMSTRUKTUR UND INSPEKTIONSVERFAHREN IN ZUSAMMENHANG MIT DEM INSPEKTIONSSYSTEM
SYSTÈME D'INSPECTION, STRUCTURE DE SERRAGE ET PROCÉDÉ D'INSPECTION ASSOCIÉ AU SYSTÈME D'INSPECTION

(30) Priority: 30.06.2020 MY PI2020003403
(43) Date of publication of application: 03.05.2023
(73) Proprietor: Petroliam Nasional Berhad (Petronas), 50088 Kuala Lumpur (MY)
(72) Inventor: MAHMOOD, Ahmad Kamil, Perak, 32610 (MY); AB RAHIM, Lukman, Perak, 32610 (MY); ABDUL AZIZ, Izzatdin, Perak, 32610 (MY); JAAFAR, Jafreezal, Perak, 32610 (MY); HASSAN, Mohd Fadzil, Perak, 32610 (MY); HASAN, Mohd Hilmi, Perak, 32610 (MY); M ALI, M Nazmi, Kuala Lumpur, 50088 (MY); ABU BAKAR, M Hisham, Kuala Lumpur, 50088 (MY); M TUSELIM, Ahmad Sirwan, Kuala Lumpur, 50088 (MY); ZAKARIA, Muzdalifah, Kuala Lumpur, 50088 (MY)
(74) Representative: HGF
(86) International application number: PCT/MY2021/050048
(87) International publication number: WO 2022/005275

(56) References cited:
- WO-A1-2017/053712
- CN-A- 111 306 378
- CN-A- 111 306 378
- KR-A- 20110 059 000
- KR-B1- 101 554 172
- US-A1- 2017 100 806
- KOUSIOPOULOS GEORGIOS-PANAGIOTIS ET AL: "Pipeline Leak Detection in Noisy Environment", 2019 8TH INTERNATIONAL CONFERENCE ON MODERN CIRCUITS AND SYSTEMS TECHNOLOGIES (MOCAST), IEEE, 13 May 2019 (2019-05-13), pages 1 - 5, XP033563062, DOI: 10.1109/MOCAST.2019.8741673

## Description

### Field Of Invention

The present disclosure generally relates to a structure (i.e., a clamping mechanism/structure) suitable for facilitating pipeline inspection.

### Background

It is a necessity to perform inspection on a pipeline to ensure pipeline integrity. Examples of inspection include corrosion inspection which can be performed by manner of conventional solutions such as intelligent pigging based technology.

In a specific example, in the context of a conventional solution such as corrosion inspection, sizing and location of the corrosions along the pipeline using techniques like magnetic flux leakage (MFL), ultrasonic, electro-magnetic acoustic transducer (EMAT) etc. can be determined. For example, Kousiopoulos Georgios-Panagiotis et al: "Pipeline Leak Detection in Noisy Environment", 2019 8th International Conference on Modem Circuits and System Technologies*,* discloses an Acoustic Emission (AE) method for the detection and localization of a leak in a pipeline using acoustic sensors mounted on the external surface of the pipeline, which receive acoustic signals created due to the existence of a leak.

The present disclosure contemplates that conventional solution(s) as discussed above is/are not ideal. Specifically, significant effort in terms of planning, management of resources and/or logistical consideration(s) (e.g., to mobilize tools at site) may be necessary. Moreover, modification(s) (e.g., to the pipeline for, for example, installation of one or more inspection devices) and/or operational shutdown(s) (e.g., during the aforementioned modification(s)) may become necessary.

Hence conventional solution(s) may not facilitate inspection of a pipeline in an efficient and/or user-friendly manner. Moreover, conventional solution(s) may not facilitate inspection in a manner such that detected integrity issue(s)/concern(s) can be rectified in a timely manner.

The present disclosure contemplates that there is a need to improve the manner in which a pipeline can be inspected.

### Summary of the Invention

In accordance with an aspect of the disclosure, there is provided a structure.

The structure can be suitable for use with a pipeline which can include a plurality of pipe sections. The structure can be shaped and dimensioned to couple at least two pipe sections.

The structure can include a housing which can be shaped and dimensioned to carry at least one device. The device(s) can be capable of receiving at least one detection signal associated with the pipeline. The detection signal(s) can be communicated within at least a portion of the pipeline. Moreover, the detection signal(s) can be received by an analyser for analysis to determine at least one defect associable with the pipeline.

In accordance with another aspect of the disclosure, there is provided an inspection method. The inspection method can be suitable for inspecting a pipeline. The pipeline can include a plurality of pipe sections.

The inspection method can include providing a structure which can carry at least one device. The device(s) can be configured to receive at least one detection signal associable with the pipeline. The detection signal(s) can be communicated within at least a portion of the pipeline.

The inspection method can further include coupling at least two pipe sections using the structure so that a passageway is formed through the pipeline.

Moreover, the detection signal is capable of being received by an analyser for analysis to determine at least one defect associable with the pipeline.

### Brief Description of the Drawings

Embodiments of the disclosure are described hereinafter with reference to the following drawings, in which:
Fig. 1 shows an inspection system 100 which can include at least one structure, according to an embodiment of the disclosure;
Fig. 2 shows an example structure of Fig. 1 which can correspond to a clamping structure, according to an embodiment of the disclosure;
Fig. 3a and Fig. 3b show, respectively, a first example positioning and a second example positioning in association with the example structure of Fig. 2, according to an embodiment of the disclosure; and
Fig, 4 shows an inspection method in association with the inspection system of Fig. 1, according to an embodiment of the disclosure.

### Detailed Description

The present disclosure contemplates that to mitigate the need for the aforementioned modification(s) and/or operational shutdown(s), inspection capabilities should be in-built based (i.e., built in the pipeline). However, although being in-built (i.e., in the pipeline), the present disclosure contemplates that such inspection capabilities should not hinder the basic/fundamental operation(s) of the pipeline and/or affect functional reliability of the pipeline.

Moreover, the present disclosure contemplates that conventional solution(s) may not facilitate inspection in a manner such that detected integrity issue(s)/concern(s) can be rectified in a timely manner as conventional solution(s) do/does not provide real-time based data. As real-time based data cannot be obtained, any required rectification(s) may be delayed. In this regard, the present disclosure contemplates that in-built based inspection capabilities can facilitate real-time based data being obtained for timely rectification of possible integrity issue(s)/concern(s).

Therefore, the present disclosure contemplates at least one structure which can couple sections of a pipeline together. Such a structure can carry one or more devices capable of facilitating inspection of the pipeline. Moreover, such a structure can, for example, be akin to/correspond to a clamping mechanism (i.e., a clamping structure) which can clamp sections of a pipeline together. Effectively, the structure (carrying one or more devices capable of facilitating inspection of the pipeline) can, for example, be considered to be integral with the pipeline (i.e., a portion/part of the pipeline) and the aforementioned one or more devices can be considered to be in-built into the pipeline.

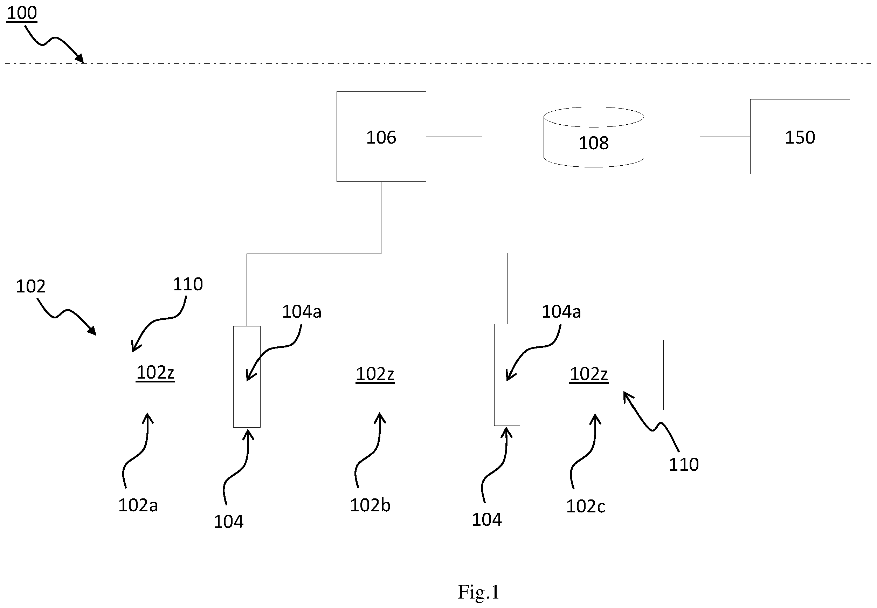

The foregoing will be discussed in further detail with reference to Fig. 1 to Fig. 4 hereinafter.

Referring to Fig. 1, there is provided an inspection system 100, in accordance with an embodiment of the disclosure.

The inspection system 100 includes a pipeline 102, at least one structure 104 and at least one analyzer 106. The analyzer(s) 106 is coupled to one or both of the pipeline 102 and the structure(s) 104, in accordance with an embodiment of the disclosure. The inspection system 100 can, as an option, further include at least one server 108 which can be coupled to one or both of the pipeline 102 and the analyzer(s) 106, in accordance with an embodiment of the disclosure. Coupling in the context of the analyzer(s) 106 and/or the server(s) 108 can be based on one or both of wired coupling and wireless coupling.

Generally, the pipeline 102 can be considered to be coupled to the structure(s) 104, as will be discussed in further detail hereinafter.

The pipeline 102 includes a plurality of pipe sections. In one example, the pipeline 102 can include a first pipe section 102a and a second pipe section 102b. In another example, the pipeline 102 can include a first pipe section 102a, a second pipe section 102b and a third pipe section 102c.

The pipe sections 102a/102b/102c are coupled (i.e., held together/connected) by the structure(s) 104 such that a passageway 110 through the pipeline 102 can be defined. In one example, the inspection system 100 can include one structure 104 which couples the first and second pipe sections 102a/102b. In another example, the inspection system 100 can include one structure 104 (i.e., a first structure) which can couple the first and second pipe sections 102a/102b, and another structure 104 (i.e., a second structure) which can couple the second and third pipe sections 102b/102c.

Specifically, the pipe sections 102a/102b/102c are coupled (i.e., held together/connected) by the structure(s) 104 such that an undisrupted passageway 110 through the pipeline 102 can be defined.

In one embodiment, a structure 104 can be shaped and dimensioned in a manner such that a structure inner surface (not shown) and a structure through passage 104a can be defined. Each of the pipe sections 102a/102b/102c can be shaped and dimensioned in a manner such that a pipe inner surface (not shown) and a pipe through passage 102z can be defined. The uninterrupted passageway 110 can be defined based on the combination of the pipe through passage(s) 102z and the structure through passage(s) 104a.

In this regard, it is appreciable that the structure(s) 104 can be considered to be integral to the pipeline 102, according to an embodiment of the disclosure. In an example, the structure(s) 104 can permanently couple the pipe section(s) 102a/102b/102c, according to an embodiment of the disclosure.

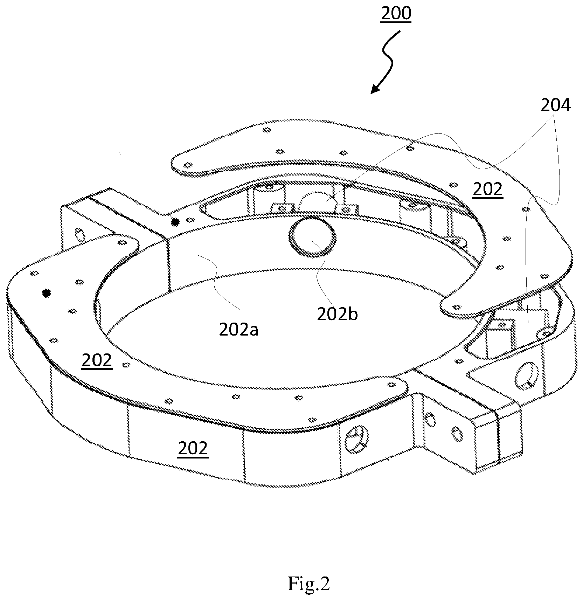

Earlier mentioned, the structure 104 can carry one or more devices (as will be shown later in Fig. 2, in accordance with an embodiment of the disclosure, and labeled as "204") capable of facilitating inspection of the pipeline 102. The device(s) can be configured to receive one or more detection signals from at least one portion of the pipeline 102. Specifically, detection signal(s) can be communicated through at least a portion of the uninterrupted passageway 110 and received/detected by the device(s). Appreciably, the device(s) can be considered to be permanently installed on the pipeline 102, in accordance with an embodiment of the disclosure.

The present disclosure contemplates that one or more openings (not shown) can be defined on the structure inner surface so as to allow/facilitate detection/receipt of the detection signal(s), associable with at least a portion of the uninterrupted passageway 110, by the device(s). The structure(s) 104 will be discussed later in further detail with reference to Fig. 2, in accordance with an embodiment of the disclosure.

The detection signal(s) received/detected by the device(s) are further communicated in a manner so as to be received by the analyzer(s) 106 for analysis for detection of integrity issue(s)/concern(s) associated with the pipeline 102. The analyzer(s) 106 is configured to generate one or more analysis signals in association with the aforementioned detection of integrity issue(s)/concern(s) associated with the pipeline 102. As an option, the analysis signal(s) can be communicated to the server(s) 108 for, for example, storage for future analysis, application of machine learning and/or further communication to one or more user devices 150 (e.g., for the purpose of notification).

In one example implementation, the inspection system 100 can be associated with ultra-long-range acoustic based technology (ULRAT) for detecting, for example, one or more corrosion defects along the pipeline 102.

ULRAT can be associated with the acquisition of one or more acoustic emission (AE) signals from one or more corrosion activities occurring/happening in the pipeline 102. In this regard, AE signal(s) can be associated with the pipeline 102. Such acoustic emission signal(s) can correspond to the aforementioned detection signal(s) and the detection signal(s) can be associated with the pipeline 102. Acoustic Emission Testing (AET) can be utilized to detect corrosion(s) in the pipeline 102. This can be done by, for example, detecting one or more transient stress waves generated by a rapid release of energy during a corrosion process occurring along the pipeline 102.

In the example implementation, the aforementioned device(s) can correspond to acoustic emission (AE) sensor(s). An AE sensor can, example, correspond to a piezoelectric (PZT) type sensor which can measure the AE signal(s) which can, for example, correspond to elastic wave(s) generated by the distortion produced during the corrosion process.

One or more AE signals can be indicative of one or more corrosion reactions which taking place during data acquisition.

Moreover, AE signals are associated with different characteristics corresponding to different damage types such as passive film breakdown, hydrogen gas evolution, corrosive pitting, hydrogen related damage, initialization and extension of crack, and fracture. The signal(s) include one or more AE parameters such as energy, AE hits and/or event and signal strength. Such AE parameters are indicative of corrosion which can be associated with one or more different corrosion sources. Location concerning detected corrosion(s) can also be determined based on velocity of wave and the attenuation of the AE signal(s) communicated along the pipeline 102.

Additionally, the present disclosure contemplates the possibility that such AE parameter(s) can be useful for differentiating between developing and non-developing corrosion(s).

A ULRAT based system can include, for example, one or more integrated amplifiers and one or more auto sensor testing (AST) capable low frequency type AE sensors/ transducers, physical acoustic manufactured Express-8 PCI (peripheral component interconnect) express module (e.g., which can be based on a 16-channel AE system) and a real-time data acquisition and replay type software (e.g., AEwin^{™}). It is contemplated that the integrated amplifier(s) can provide higher noise tolerance for industrial use and can remove the need for one or more external pre-amplifier(s) - this can be helpful for achieving a compact design and long cable length (i.e., from the AE sensor(s) to data acquisition hardware such as the Express-8 PCI express module. The Express-8 PCI express module can, for example, include the requisite analogue and/or digital filters for efficient data acquisition. The aforementioned real-time data acquisition and replay type software can be useful for providing suitable software interface for performing one or more functions such as hardware settings, data acquisition and/or storage. The aforementioned real-time data acquisition and replay type software can also be useful for providing a platform for data analysis (e.g. data filtering, event localization). Therefore, the aforementioned analyzer(s) 106 can be one or both of hardware based (e.g., The Express-8 PCI express module) and software based (e.g., the real-time data acquisition and replay type software).

On completion of a data acquisition session, the acquired data can be communicated one or more servers 108 and/or one or more user device(s) 150 for remote user access.

In view of the foregoing, it is appreciable that as the device(s) (e.g., AE sensor(s)) can, in one embodiment, be considered to be permanently installed (i.e., akin to being "in-built based") on the pipeline 102, the need for the aforementioned modification(s) and/or operational shutdown(s) can be substantially avoided/mitigated. Moreover, real-time data acquisition (i.e., acquisition of real-time based data such as the AE signal(s)) can be facilitated. Hence, timely rectification of possible integrity issue(s)/concern(s) can be facilitated, in accordance with an embodiment of the disclosure. Furthermore, it is contemplated that continuous monitoring/inspection of the pipeline 102 for possible integrity issue(s)/concern(s) can be facilitated.

The aforementioned structure(s) 104 will be discussed in further detail with reference to Fig. 2 in the context of an example structure hereinafter.

Referring to Fig. 2, an example structure, in association with the aforementioned structure 104, is shown, in accordance with an embodiment of the disclosure.

The example structure can, for example, correspond to a clamp 200, according to an embodiment of the disclosure. The example structure will now be discussed in the context of a clamp 200 (i.e., also referable to as a clamping structure/mechanism) hereinafter.

Generally, the clamp 200 is suitable for use with the aforementioned pipeline 102. Specifically, the clamp 200 can be shaped and dimensioned to couple at least two pipe sections 102a/102b/102c.

As shown, the clamp 200 includes a housing 202 which is shaped and dimensioned to carry one or more devices 204 (e.g., one to four, or more devices 204).

In one embodiment, the housing 202 can be shaped and dimensioned such that an inner surface 202a (i.e., corresponding to the aforementioned structure inner surface) can be defined. Moreover, the housing 202 can be shaped and dimensioned such that one or more openings 202b can be defined.

In one embodiment, when the clamp 200 couples the pipe sections 102a/102b/102c, it is appreciable that the inner surface 202a can be conformed to/based on the form (e.g., exterior shape) associated with the pipeline 102. For example, the pipeline 102 can be of a cylindrical form (i.e., cylindrical shape) and the inner surface 202a, when the clamp 200 has coupled the pipeline sections 102a/102b/102c, can be associated with a cylindrical form. Hence the form associated with the inner surface 202a can be based on the form associated with the pipeline 102. Furthermore, the opening(s) 202b can be shaped and dimensioned in a manner so as to be capable of accommodating "O"-ring(s).

As mentioned earlier, the device(s) 204 is configured to facilitate inspection of the pipeline 102. Specifically, the device(s) 204 are configured to receive one or more detection signals from at least one portion of the pipeline 102. More specifically, detection signal(s) can be communicated through at least a portion of the uninterrupted passageway 110 and received/detected by the device(s) 204. The detection signal(s) can, for example, correspond to the aforementioned AE signal(s) and the device(s) 204 can, for example, correspond to the aforementioned AE sensor(s). The detection signal(s) can be received by the device(s) 204 via the opening(s) 202b.

In one example, the one device 204 (e.g., a first device) can be positioned within the housing 202 in a manner so as to coincide with an opening 202b (e.g., a first opening). In another example, another device 204 (e.g., a second device) can be positioned within the housing 202 in a manner so as to coincide with another opening (e.g., a second opening). Generally, the device(s) 204 (e.g., a first device and a second device) can be securely positioned (i.e., immovably positioned) within the housing 202 and coinciding with the opening(s) 202b (e.g., the first opening and the second opening) so as to be able to receive the detection signal(s) through the opening 202b. Specifically, the first and second devices 204 can be positioned within the housing 202 in a manner so as to coincide with the first and second openings 202b respectively.

The present disclosure generally contemplates that the clamp 200 can be configured to fulfill the objective(s) of permanent installation of the device(s) 204 (e.g., AE sensor(s)) on the pipeline 102 and continuously collecting the detection signal(s) (e.g., real-time collection of data such as the AE signal(s)).

The present disclosure further contemplates that the clamp 200 ought to be capable of withstanding various environmental conditions such as heavy rains, prolonged exposure to hot weather conditions (e.g., under the hot sun for a long period of time), strong winds and being buried underground in dry/moist ground. Generally, the clamp 200 can be configured to preserve integrity of the device(s) 204 (e.g., protect the device(s) 204 from heat, dust and/or water while ensuring that the device(s) are capable of collecting reliable AE signal(s)).

The present disclosure yet further contemplates that the clamp 200 would substantially not affect/alter the characteristics (e.g., wave velocity and/or amplitude) associated with acquired detection signal(s). Moreover, it is contemplated that the aforementioned 'O' ring(s) can be helpful in, for example, impeding any water seepage(s) and/or leakage(s).

Generally, the clamp 200 can be considered to be a "closed casing concept" to facilitate enhanced protection in relation to, for example, the device(s) 204 (e.g., impede water seepage). For example, the AE Sensor(s) can be considered to be installed internally (i.e., within the clamp 200) for enhanced protection.

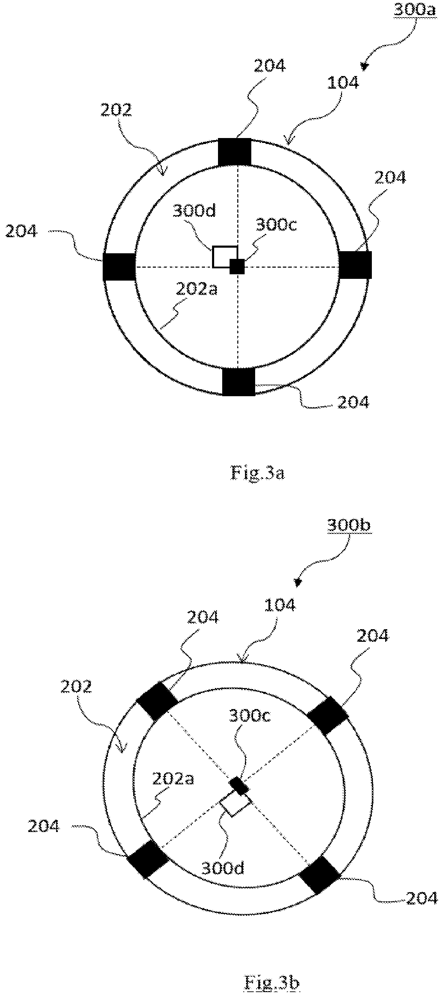

The present disclosure further contemplates that positioning (e.g., orientation) of the device(s) 204 can be adjusted/changed, in accordance with an embodiment of the disclosure. This will now be discussed in further detail with reference to Fig. 3 hereinafter.

Fig. 3a shows a first example positioning 300a (e.g., a first example orientation) concerning the device(s) 204, in accordance with an embodiment of the disclosure. Fig. 3b shows a second example positioning 300b (e.g., a second example orientation) concerning the device(s) 204, in accordance with an embodiment of the disclosure.

Earlier mentioned, the structure(s) 104 can permanently couple the pipe section(s) 102a/102b/102c, according to an embodiment of the disclosure.

The present disclosure contemplates that prior to permanently coupling the pipe sections 102a/102b/102c, the structure(s) 104 can be flexibly moved/adjusted (e.g., flexibly rotated) between the pipe sections 102a/102b/102c such that the device(s) 204 can be positioned between the first example positioning 300a and second example positioning 300b. After the desired positioning concerning the device(s) 204 is achieved, a structure 104 can be permanently fixed in position between the pipe sections 102a/102b/102c which the structure 104 is coupling.

**In** one embodiment, a structure 104 can correspond to a multiple parts-based structure (not shown). For example, the structure 104 can include a first part and a second part which can be secured/held together by mechanical parts (e.g., nuts, bolts and/or screws) or welded together for coupling (e.g., clamping) at least two pipe sections 102a/102b/102c. The first and second parts can, for example, be separate and distinct parts prior to coupling the pipe sections 102a/102b/102c or separated (e.g., taken apart physically) when the pipe sections 102a/102b/102c need to be decoupled.

**In** another embodiment, a structure 104 can correspond to a single part-based structure (not shown). For example, the structure 104 can include a first half which is held to a second half by a hinged arrangement (e.g., at one end holding the first and second halves together) so to be movable between an open configuration and a closed configuration. In the open configuration, the structure 104 can be positioned between at least two pipe sections 102a/102b/102c. After being suitably positioned, the first and second halves can be moved to the closed position so that the structure 104 can couple the pipe sections 102a/102b/102c. After being moved to the closed position, the first and second halves can, at another end, be secured/held together by mechanical parts (e.g., nuts, bolts and/or screws) or welded together for coupling (e.g., clamping) at least two pipe sections 102a/102b/102c.

Moreover, as shown, in one embodiment, the devices 204 carried within the housing 202 can be arranged relative to a point of original 300c such that substantially right angled-based intersections 300d at can defined. In this regard, the devices 204 can be considered to be positioned within the housing 202 in an orthogonal based arrangement relative to each other.

To put the foregoing discussion in general perspective, the present disclosure contemplates at least one structure 104 suitable for use with a pipeline 102 having a plurality of pipe sections 102a/102b/102c.

The structure(s) 104 can be shaped and dimensioned to couple at least two pipe sections 102a/102b and can include a housing 202.

The housing 202 can be shaped and dimensioned to carry at least one device 204 which can be capable of receiving at least one detection signal associated with the pipeline 102. Generation of the detection signal(s) can be caused by one or more defects/potential defects (e.g., corrosion/developing corrosion) associated with the pipeline 102. The detection signal(s) can be communicated within at least a portion of the pipeline 102 and subsequently received by the device(s) 204.

The detection signal(s) can be subsequently received by an analyser 106 for analysis to determine at least one defect associable with the pipeline 102. For example, the detection signal(s) can be communicated from the device(s) 204 to the analyser 106 via one or both of wired communication and wireless communication.

In one embodiment, a structure 104 can correspond to a clamping structure (i.e., referable to simply as a "clamp" 200) capable of clamping at least two pipe sections 102a/102b such that the structure(s) 104 and the at least two pipe sections 102a/102b can form an integral unit so that the device(s) 204 can be securely installed on the pipeline 102 without disrupting the pipeline 102 passageway 110 (i.e., an uninterrupted passageway 110).

Moreover, in one embodiment, the housing 202 can be shaped and dimensioned in a manner so that at least one opening 202b can be defined. The device(s) 204 can be carried within the housing 202 and the detection signal(s) can be received by the device(s) 204 via the opening(s) 202b.

Furthermore, in one embodiment, the opening(s) 202b can be shaped and dimensioned in a manner so as to accommodate an "O" ring for, for example, impeding water seepage and leakage in respect of the device(s) 204.

Yet furthermore, in one embodiment, the housing 202 can carry a plurality of devices 204 (i.e., two or more device(s) 204). The housing 202 can be shaped and dimensioned in a manner so that a corresponding plurality of openings 202b can be defined such that one device from the plurality of devices 204 can be paired with a corresponding opening from the plurality of openings 202b. At least one detection signal associated with the pipeline 102 can be received by a device 204 via a corresponding opening 202b. Each opening 202b can be shaped and dimensioned in a manner so as to accommodate an "O" ring for impeding water seepage and leakage in respect of a corresponding device 204.

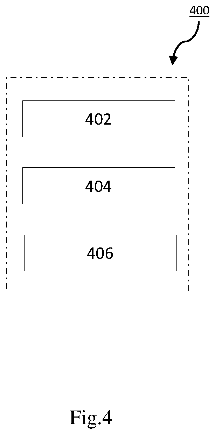

Referring to Fig. 4, an inspection method 400 is shown, in accordance with an embodiment of the disclosure. The inspection method 400 is associated with the aforementioned inspection system 100.

Specifically, the inspection method 400 is suitable for inspecting the pipeline 102.

The inspection method 400 includes a providing step 402, a coupling step 404 and a detection step 406.

With regard to the providing step 402, at least one structure 104 is provided.

With regard to the coupling step 406, at least two pipe sections 102a/102b are coupled using the structure(s) 104.

With regard to the detection step 406, the device(s) 204 are configured to receive the detection signal(s).

In general, the present disclosure contemplates an inspection method 400 for inspecting a pipeline 102 which includes a plurality of pipe sections 102a/102b/102c.

The inspection method 400 includes providing at least one structure 104 capable of carrying at least one device 204 which is configured to receive at least one detection signal associable with the pipeline 102. The detection signal(s) can be communicated within at least a portion of the pipeline 102.

The inspection method 400 further includes coupling at least two pipe sections 102a/102b (i.e., connecting the pipe sections 102a/102b together) using the structure 104 so that a passageway 110 is formed through the pipeline 102.

The detection signal(s) are received by an analyser 106 for analysis to determine at least one defect associable with the pipeline 102. Specifically, the detection signal(s) are subsequently received by the analyser 106 for analysis to determine at least one defect associable with the pipeline 102. For example, the detection signal(s) can be communicated from the device(s) 204 to the analyser 106 via one or both of wired communication and wireless communication.

It should be further appreciated by the person skilled in the art that variations and combinations of features described above, not being alternatives or substitutes, may be combined to form yet further embodiments.

In one example, the housing 202 can be constructed based on explosion proof material to improve robustness. It is contemplated that explosion proof type device(s) 204 may not be necessary.

In another example, one or more layers of polytetrafluoroethylene (PTFE) seal tape can be applied (e.g., between the structure 104 and the pipe sections 102a/102b/102c the structure 104 is coupling) to at least reduce (more preferably, to eliminate) galvanic corrosion.

In yet another example, the clamp 200 can be covered/wrapped with one or more heat insulation sheets to reduce heating (e.g., during hot weather condition(s)) and/or impede water seepage.

In yet a further example, the structure(s) 104 can include one or more cable glands and/or one or more conduits for positioning/securing cables (where required) in connection with the aforementioned device(s) 204.

In the foregoing manner, various embodiments of the disclosure are described for addressing at least one of the foregoing disadvantages. Such embodiments are intended to be encompassed by the following claims, and are not to be limited to specific forms or arrangements of parts so described and it will be apparent to one skilled in the art in view of this disclosure that numerous changes and/or modification can be made, which are also intended to be encompassed by the following claims.

## Claims

1. A structure (104) suitable for use with a pipeline (102), the pipeline (102) having a plurality of pipe sections (102a, 102b, 102c), the structure (104) shaped and dimensioned to couple at least two pipe sections, the structure (104) comprising:
a housing (202) shaped and dimensioned to carry at least one device (204) capable of receiving at least one detection signal associated with the pipeline (102), the detection signal being communicable within at least a portion of the pipeline (102),
**characterized in that** the detection signal is an acoustic emission signal capable of being received by an analyser (106) for analysis to determine at least one defect associated with the pipeline (102);
and **in that** the structure (104) corresponds to a clamping structure (200) capable of clamping at least two pipe sections such that the structure (104) and the at least two pipe sections form an integral unit so that the device (204) is securely installed on the pipeline (102) without disrupting a pipeline passageway (110).

2. The structure (104) as claimed in claim 1,
wherein the housing (202) is shaped and dimensioned in a manner so that at least one opening (202b) is defined, and
wherein the device (204) is disposed within the housing (202) and the detection signal is receivable by the device (204) via the opening (202b).

3. The structure (104) as claimed in claim 2, wherein the opening (202b) is shaped and dimensioned in a manner so as to accommodate an "O" ring for impeding water seepage and leakage in respect of the device (204).

4. The structure (104) as claimed in claim 1,
wherein the housing (202) is capable of carrying a plurality of devices (204), wherein the housing (202) is shaped and dimensioned in a manner so that a corresponding plurality of openings (202b) are defined such that one device (204) from the plurality of devices (204) is paired with a corresponding opening (202b) from the plurality of openings (202b),
wherein a detection signal associable with the pipeline (102) is receivable by a device (204) via a corresponding opening (202b), and
wherein each opening (202b) is shaped and dimensioned in a manner so as to accommodate an "O" ring for impeding water seepage and leakage in respect of a corresponding device (204).

5. The structure (104) as claimed in claim 4, wherein the plurality of devices (204) are positioned within the housing (202) in an orthogonal based arrangement relative to each other.

6. An inspection method (400) for inspecting a pipeline (102), the pipeline (102) including a plurality of pipe sections (102a, 102b, 102c), the inspection method (400) comprising:
providing (402) a structure (104) capable of carrying at least one device (204) configurable to receive at least one detection signal associable with the pipeline, the detection signal being communicable within at least a portion of the pipeline (102); and
coupling (404) at least two pipe sections using the structure (104) so that a passageway (110) is formed through the pipeline (102); receiving the detection signal by an analyser (106) for analysis to determine at least one defect associated with the pipeline (102),
**characterized in that** the detection signal is an acoustic emission signal;
and **in that** the structure (104) corresponds to a clamping structure (200) capable of clamping at least two pipe sections such that the structure (104) and the at least two pipe sections form an integral unit so that the device (204) is securely installed on the pipeline (102) without disrupting the pipeline passageway (110).

7. An inspection system (100) comprising:
the structure (104) as claimed in any one of claims 1 to 5; and
an analyser (106) in communication with the structure (104) and configured to analyse the detection signal received from the structure (104) to determine at least one defect associated with the pipeline (102).

## Patentansprüche

1. Struktur (104), die zur Verwendung mit einer Rohrleitung (102) geeignet ist, wobei die Rohrleitung (102) eine Vielzahl von Rohrabschnitten (102a, 102b, 102c) aufweist, wobei die Struktur (104) so geformt und dimensioniert ist, dass sie mindestens zwei Rohrabschnitte koppelt, wobei die Struktur (104) Folgendes umfasst:
ein Gehäuse (202), das so geformt und dimensioniert ist, dass es mindestens eine Vorrichtung (204) trägt, die in der Lage ist, mindestens ein Erkennungssignal, das der Rohrleitung (102) zugeordnet ist, zu empfangen, wobei das Erkennungssignal innerhalb mindestens eines Abschnitts der Rohrleitung (102) kommunizierbar ist,
**dadurch gekennzeichnet, dass** das Erkennungssignal ein Schallemissionssignal ist, das in der Lage ist, von einem Analysator (106) zur Analyse empfangen zu werden, um mindestens einen Defekt zu bestimmen, der der Rohrleitung (102) zugeordnet ist;
und dass die Struktur (104) einer Klemmstruktur (200) entspricht, die in der Lage ist, mindestens zwei Rohrabschnitte zu klemmen, sodass die Struktur (104) und die mindestens zwei Rohrabschnitte eine integrale Einheit ausbilden, sodass die Vorrichtung (204) sicher an der Rohrleitung (102) installiert ist, ohne einen Rohrleitungsdurchgang (110) zu unterbrechen.

2. Struktur (104) nach Anspruch 1,
wobei das Gehäuse (202) so geformt und dimensioniert ist, dass mindestens eine Öffnung (202b) definiert ist, und
wobei die Vorrichtung (204) innerhalb des Gehäuses (202) angeordnet ist und das Erkennungssignal durch die Vorrichtung (204) über die Öffnung (202b) empfangbar ist.

3. Struktur (104) nach Anspruch 2, wobei die Öffnung (202b) so geformt und dimensioniert ist, dass sie einen "O"-Ring zum Verhindern von Wasserdurchsickern und -auslaufen in Bezug auf die Vorrichtung (204) aufnimmt.

4. Struktur (104) nach Anspruch 1,
wobei das Gehäuse (202) in der Lage ist, eine Vielzahl von Vorrichtungen (204) zu tragen, wobei das Gehäuse (202) so geformt und dimensioniert ist, dass eine entsprechende Vielzahl von Öffnungen (202b) so definiert ist, dass eine Vorrichtung (204) aus der Vielzahl von Vorrichtungen (204) mit einer entsprechenden Öffnung (202b) aus der Vielzahl von Öffnungen (202b) gepaart ist,
wobei ein Erkennungssignal, das der Rohrleitung (102) zuordenbar ist, durch eine Vorrichtung (204) über eine entsprechende Öffnung (202b) empfangbar ist, und
wobei jede Öffnung (202b) so geformt und dimensioniert ist, dass sie einen "O"-Ring zum Verhindern von Wasserdurchsickern und -auslaufen in Bezug auf eine entsprechende Vorrichtung (204) aufnimmt.

5. Struktur (104) nach Anspruch 4, wobei die Vielzahl von Vorrichtungen (204) innerhalb des Gehäuses (202) in einer orthogonal basierten Anordnung relativ zueinander positioniert sind.

6. Inspektionsverfahren (400) zum Inspizieren einer Rohrleitung (102), wobei die Rohrleitung (102) eine Vielzahl von Rohrabschnitten (102a, 102b, 102c) enthält, wobei das Inspektionsverfahren (400) Folgendes umfasst:
Bereitstellen (402) einer Struktur (104), die in der Lage ist, mindestens eine Vorrichtung (204) zu tragen, die konfigurierbar ist, um mindestens ein Erkennungssignal, das der Rohrleitung zuordenbar ist, zu empfangen, wobei das Erkennungssignal innerhalb mindestens eines Abschnitts der Rohrleitung (102) kommunizierbar ist; und
Koppeln (404) mindestens zweier Rohrabschnitte unter Verwendung der Struktur (104), sodass ein Durchgang (110) durch die Rohrleitung (102) ausgebildet wird; Empfangen des Erkennungssignals durch einen Analysator (106) zur Analyse, um mindestens einen Defekt zu bestimmen, der der Rohrleitung (102) zugeordnet ist,
**dadurch gekennzeichnet, dass** das Erkennungssignal ein Schallemissionssignal ist;
und dass die Struktur (104) einer Klemmstruktur (200) entspricht, die in der Lage ist, mindestens zwei Rohrabschnitte zu klemmen, sodass die Struktur (104) und die mindestens zwei Rohrabschnitte eine integrale Einheit ausbilden, sodass die Vorrichtung (204) sicher an der Rohrleitung (102) installiert ist, ohne den Rohrleitungsdurchgang (110) zu unterbrechen.

7. Inspektionssystem (100), umfassend:
die Struktur (104) nach einem der Ansprüche 1 bis 5; und
einen Analysator (106), der in Kommunikation mit der Struktur (104) steht und dazu konfiguriert ist, das von der Struktur (104) empfangene Erkennungssignal zu analysieren, um mindestens einen Defekt zu bestimmen, der der Rohrleitung (102) zugeordnet ist.

## Revendications

1. Structure (104) appropriée pour une utilisation avec une canalisation (102), la canalisation (102) présentant une pluralité de sections de tuyau (102a, 102b, 102c), la structure (104) étant formée et dimensionnée pour coupler au moins deux sections de tuyau, la structure (104) comprenant :
un boîtier (202) formé et dimensionné pour porter au moins un dispositif (204) capable de recevoir au moins un signal de détection associé à la canalisation (102), le signal de détection pouvant être communiqué au sein d'au moins une partie de la canalisation (102),
**caractérisée en ce que** le signal de détection est un signal d'émission acoustique capable d'être reçu par un analyseur (106) pour analyse pour déterminer au moins un défaut associé à la canalisation (102) ;
et **en ce que** la structure (104) correspond à une structure de serrage (200) capable de serrer au moins deux sections de tuyau de sorte que la structure (104) et les au moins deux sections de tuyau forment une unité intégrale afin que le dispositif (204) soit solidement installé sur la canalisation (102) sans perturber un passage de canalisation (110).

2. Structure (104) selon la revendication 1,
dans laquelle le boîtier (202) est formé et dimensionné de manière à ce qu'au moins une ouverture (202b) soit définie, et
dans laquelle le dispositif (204) est disposé au sein du boîtier (202) et le signal de détection peut être reçu par le dispositif (204) par l'intermédiaire de l'ouverture (202b).

3. Structure (104) selon la revendication 2, dans laquelle l'ouverture (202b) est formée et dimensionnée de façon à recevoir un joint torique destiné à limiter l'infiltration et la fuite d'eau par rapport au dispositif (204).

4. Structure (104) selon la revendication 1,
dans laquelle le boîtier (202) est capable de porter une pluralité de dispositifs (204), dans laquelle le boîtier (202) est formé et dimensionné de manière à ce qu'une pluralité correspondante d'ouvertures (202b) soit définie de sorte qu'un dispositif (204) de la pluralité de dispositifs (204) soit associé à une ouverture correspondante (202b) de la pluralité d'ouvertures (202b),
dans laquelle un signal de détection pouvant être associé à la canalisation (102) peut être reçu par un dispositif (204) par l'intermédiaire d'une ouverture correspondante (202b), et
dans laquelle chaque ouverture (202b) est formée et dimensionnée de façon à recevoir un joint torique destiné à limiter l'infiltration et la fuite d'eau par rapport à un dispositif correspondant (204).

5. Structure (104) selon la revendication 4, dans laquelle la pluralité de dispositifs (204) sont positionnés au sein du boîtier (202) dans un agencement à base orthogonale les uns par rapport aux autres.

6. Procédé d'inspection (400) destiné à inspecter une canalisation (102), la canalisation (102) comprenant une pluralité de sections de tuyau (102a, 102b, 102c), le procédé d'inspection (400) comprenant :
la fourniture (402) d'une structure (104) capable de porter au moins un dispositif (204) pouvant être configuré pour recevoir au moins un signal de détection pouvant être associé à la canalisation, le signal de détection pouvant être communiqué au sein d'au moins une partie de la canalisation (102) ; et
le couplage (404) d'au moins deux sections de tuyau à l'aide de la structure (104) afin qu'un passage (110) soit formé à travers la canalisation (102) ; la réception du signal de détection par un analyseur (106) pour analyse afin de déterminer au moins un défaut associé à la canalisation (102),
**caractérisé en ce que** le signal de détection est un signal d'émission acoustique ;
et **en ce que** la structure (104) correspond à une structure de serrage (200) capable de serrer au moins deux sections de tuyau de sorte que la structure (104) et les au moins deux sections de tuyau forment une unité intégrale afin que le dispositif (204) soit solidement installé sur la canalisation (102) sans perturber le passage de canalisation (110).

7. Système d'inspection (100) comprenant :
la structure (104) selon l'une quelconque des revendications 1 à 5 ; et
un analyseur (106) en communication avec la structure (104) et configuré pour analyser le signal de détection reçu en provenance de la structure (104) afin de déterminer au moins un défaut associé à la canalisation (102).
